# EUROPEAN PATENT SPECIFICATION

(11) **EP 1 195 122 B1**
(45) Date of publication and mention of the grant of the patent: **07.01.2004**
(21) Application number: 01306232.8
(22) Date of filing: 19.07.2001
(51) Int. Cl.: A47J 37/12

(54) **Deep frying apparatus and method**
Fritiergerät und Verfahren
Friteuse et méthode

(30) Priority: 03.10.2000 US 678761
(43) Date of publication of application: 10.04.2002
(73) Proprietor: Pentalpha Macau Commercial Offshore Limited, Macau (MO)
(72) Inventor: Chun Kuen Sham, John, 18 Pak Pat Shan, Tai Tam (CN); Kunavongvorakul, Kumkit, Ratburana, Bangkok (TH)
(74) Representative: Grey, Ian Michael

(56) References cited:
- EP-A- 0 891 736
- GB-A- 739 014
- GB-A- 2 255 002
- US-A- 5 249 510
- US-A- 5 400 700

## Description

Although deep fryers and their accompanying technology have existed for decades, use of deep fryers in the home has been limited by a number of factors. One primary factor is the preparation and cleanup time required by using conventional deep fryers to cook food. Oil used in the cooking process readily coats non-cooking surfaces of the deep fryer (and the surrounding environment in some cases), and can be very difficult to properly clean. As is well known to those familiar with deep fryer operation, vaporized oil generated during deep fryer operation often finds its way into virtually every internal portion of many conventional deep fryers. In addition to making the deep fryer even more difficult to clean, oil deposits on controls, electronics, and internal mechanisms can damage the deep fryer. Much effort is spent in the design of many conventional deep fryers to prevent oil from escaping from the oil pan or reservoir. These designs often significantly increase the complexity of the deep fryer, make the deep fryer more difficult and time consuming to manufacture and assemble, and generally increase deep fryer cost.

The mess and required cleanup associated with conventional deep fryer operation is a deterrent to more common use of home deep fryers. Even though some conventional deep fryers do employ a removable oil pan permitting the oil pan to be more easily cleaned, this feature often does not greatly assist in cleaning the remainder of the deep fryer (such as the housing and the internal components). Commonly, electronics and controls are permanently mounted on the housing and therefore do not permit the housing to be immersed or washed in a dishwasher.

Another limitation of conventional household deep fryers regards the lack of cooking versatility common to such appliances. Specifically, conventional household deep fryers typically permit only one type of food to be cooked at one time, or at least provide only one cooking receptacle within which food being cooked is contained. This limitation presents cooking problems when different types of food are to be cooked in the deep fryer for the same meal. Inevitably, one food type is cooked in the deep fryer and is thereafter left to become cold while the other food type cooks. The inability to simultaneously cook more than one food separately in conventional household deep fryers is a limitation that can affect the desire of an individual consumer to purchase and use such an appliance.

Because deep fryers inherently operate at relatively high temperatures, additional design considerations must be taken into account for conventional household deep fryers. Deep fryer internal, body, and housing components are typically manufactured from heat-resistant materials such as metal or high-temperature plastic. Lower cost materials such as inexpensive thermoplastics generally cannot be used in the construction of deep fryers because they are incapable of withstanding the higher temperatures common in the operation of deep fryers. For example, many appliances have bodies or housings made from low-temperature thermoplastic materials that are relatively inexpensive to manufacture, that present an attractive appearance, and that are easily formed in manufacturing operations. Unfortunately, many of these materials are unable to withstand continuous temperatures in excess of 150°C, and so are not suitable for use with many conventional deep fryer designs. Existing deep fryer designs are therefore significantly limited in the types of materials that can be used for various deep fryer components.

Due at least in part to the limitations on use of materials just described, a well-recognized problem with conventional household deep fryers is the elevated temperatures of their exterior surfaces during operation. While not necessarily presenting a risk of injury to the user or others, these elevated temperatures can discourage the use of deep fryers in many instances and therefore represent an undesirable attribute of conventional household deep fryers.

Yet another problem in the design of conventional household deep fryers is related to the impact high deep fryer temperatures has upon deep fryer controls. Along with the detrimental effects that oil vapour has upon such controls as described above, this impact remains an important issue in conventional household deep fryer design. To protect electrical controls from oil vapour and high temperatures, conventional deep fryer designs commonly shield the controls using one or more walls, position the controls away from the deep fryer heater and oil pan, and/or insulate the controls in a variety of different manners. Invariably, the resulting designs are a compromise between the appearance, organization and functionality of a desired deep fryer design and the need to protect the controls from heat and oil. A more balanced design for controls location and protection remains an elusive goal in conventional home deep fryers.

In light of the problems and limitations of the prior art described above, a need exists for a portable household deep fryer that is easy to clean and that has a removable oil plan, can be used to separately cook different foods at the same time, has controls that are well protected against oil vapour and heat, has exterior surfaces that do not become excessively hot to the touch, is inexpensive to manufacture and assemble, and has body portions that can be made from relatively low-temperature thermoplastic materials. Each preferred embodiment of the present invention achieves one or more of these results.

It is known from GB 739014 to provide a portable/domestic deep fryer for consumer use, comprising a housing having an opening, a lid positionable over the opening to define a substantially enclosed cooking chamber within the housing, a pan mounted within the cooking chamber, at least one heat insulative mount located between the pan and the housing to position the pan in spaced relationship from the housing, a heater adjacent to the pan, and at least two baskets removably received within the pan.

A portable/domestic fryer according to the present invention is characterised in that the fryer is configured so that the baskets are positioned side-by-side in the pan, each basket having a basket portion and a handle connected by a hinge mechanism to permit each basket portion to be independently raised and lowered within the pan.

To enable more thorough and easier cleaning of the deep fryer, the oil pan is preferably removable from the housing (and in some preferred embodiments, removable with the heater as an integral unit). Also, the deep fryer has a lid that can be closed over the oil pan and baskets. A gasket connected to the lid can be employed to create a seal between the lid and the oil pan, thereby preventing escape of oil vapour to other areas of the deep fryer and reducing the amount of cleanup required after use of the deep fryer.

The oil pan is preferably spaced and insulated from the lid and walls of the housing in a number of ways. In preferred embodiments of the present invention, the oil pan is supported by a number of mounts vertically positioning the oil pan within the housing at desired distances from the lid and the bottom of the housing. These mounts are preferably made of heat insulative material and can be received within respective seats in the housing to also horizontally position the oil pan therein. When horizontally positioned, an air space preferably exists between the oil pan and the sides of the housing. To further insulate the bottom of the oil pan from the bottom of the housing, the mounts can be supported by an internal wall defining an air space between the internal wall and the bottom of the housing. The lid of the deep fryer defines a space over the oil pan and preferably has a heat shield spaced from the body of the lid to further insulate the body of the lid from the heat of the oil and the oil pan. The above-mentioned lid gasket also functions to prevent heat conduction from the oil pan to the lid.

By spacing and insulating the oil pan from the housing and lid of the deep fryer, operating temperatures of the housing and lid can be maintained under 200°C, and even under 150°C. These lower operating temperatures not only provide for increased user comfort in operation of the deep fryer, but also enable the use of less expensive lower-temperature thermoplastic materials for the housing and lid.

The deep fryer of the present invention also preferably employs a control module that can be disengaged and removed from the deep fryer. The control module serves as a detachable power plug for the deep fryer, but preferably has at least some (and more preferably all) of the deep fryer controls therein. These controls include a thermostat brought into temperature-sensing contact with the oil pan when positioned within the housing, connecting terminals for connecting to and supplying power to the heater, and a user-manipulatable temperature control device for controlling power to the heater (and therefore, for controlling the cooking temperature of the deep fryer). By housing the deep fryer controls within a separate control module, the deep fryer controls are better protected from high operating temperatures and contamination by oil vapor. Also, a user can readily detach and remove those deep fryer electrical elements and circuitry that cannot be immersed in water or placed in a dishwasher. The remainder of the deep fryer, including the lid, baskets, oil pan, and even the housing can be immersed in a sink or washed in a dishwasher. Deep fryer cleanup is thereby faster, simpler, and more thorough.

Further objects and advantages of the present invention, together with the organization and manner of operation thereof, will become apparent from the following detailed description of the invention when taken in conjunction with the accompanying drawings, wherein like elements have like numerals throughout the drawings.

### Brief Description of the Drawings

The present invention is further described with reference to the accompanying drawings, which show a preferred embodiment of the present invention. However, it should be noted that the invention as disclosed in the accompanying drawings is illustrated by way of example only. The various elements and combinations of elements described below and illustrated in the drawings can be arranged and organized differently to result in embodiments which are still within the spirit and scope of the present invention.

In the drawings, wherein like reference numerals indicate like parts:
FIG. 1 is a perspective view of a deep fryer according to a preferred embodiment of the present invention, shown with the lid in an open position;
FIG. 2 is an exploded view of the deep fryer illustrated in FIG. 1;
FIG. 3 is an cross sectional view of the deep fryer illustrated in FIGS. 1 and 2, taken along lines 3-3 of FIG. 1; and
FIG. 4 is top plan view of the control module of the deep fryer illustrated in FIGS. 1-3, partially sectioned to schematically show the circuitry of the control element.

### Detailed Description of the Preferred Embodiments

The household deep fryer of the present invention, indicated generally at 10, has at least two frying baskets 12, an oil pan 14, a heater 16 for heating the oil pan 14, and a housing 18 within which is received the frying baskets 12 and the oil pan 14. Preferably, the deep fryer 10 also has a lid 20 for covering the open top 22 of the housing 18 and an electrical control module 24 releasably connected to the deep fryer 10 for controlling operations of the deep fryer 10.

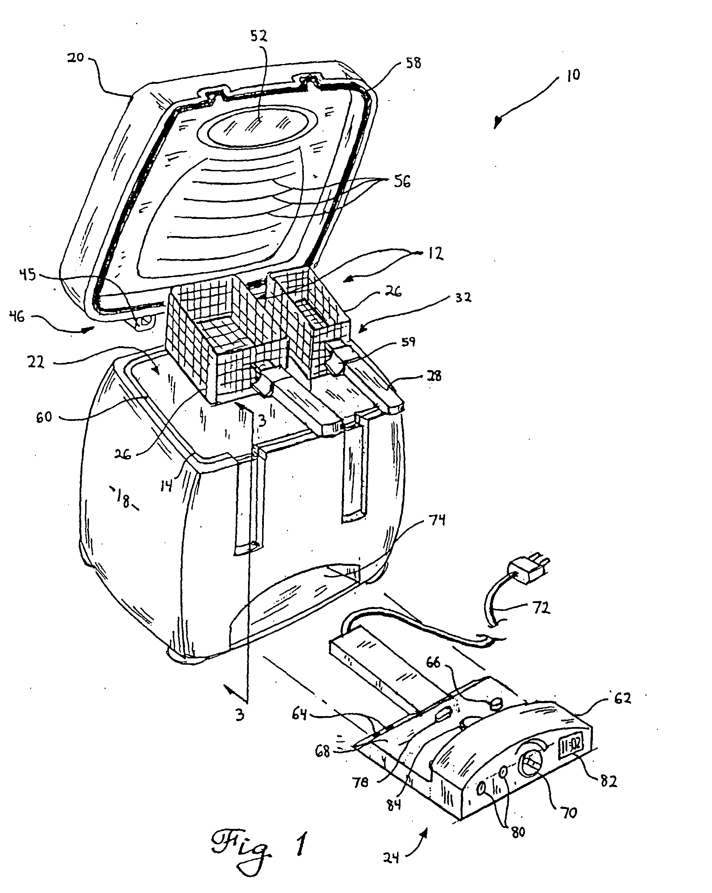

The baskets 12 of the deep fryer 10 each have a basket portion 26 and a handle 28 connected thereto. The basket portion 26 of each basket 12 is preferably a metal mesh receptacle capable of holding a quantity of food therein. Most preferably, the basket portion 26 is made from a wire mesh connected in any conventional manner to at least an upper frame 30 of the basket portion 26 (although a box-type frame, vertical frame members, and/or other frame elements can also be used to add strength and rigidity to the basket portion). The upper frame 30 can even be integral with the rest of the basket portion 26, such as where the basket 12 is molded, stamped and pressed, and the like. In alternative embodiments of the present invention, the basket portion 26 is a food receptacle defined at least partially by walls that are apertured to permit oil to enter and exit the basket, a lattice structure of bars, rods, or other members serving the same purpose, and the like.. The basket portion 26 of each basket 12 is preferably square or rectangular in shape as shown in FIGS. 1-3 in order to match the preferred rectangular or square shape of the oil pan 14 when both basket portions 26 are placed within the oil pan 14. It should be noted, however, that the basket portions 26 can be any other shape desired. Also, the basket portions 26 can be deeper or shallower than those shown in FIGS. 1-3.

The handle 28 is connected to the basket portion 26 via a hinge or hinge mechanism 32. In this manner, the handle 28 can be rotated between stored and unstored positions with respect to the housing 18 of the deep fryer 10. In one preferred embodiment of the present invention, the handle 28 is connected to a mounting plate on the basket portion 26 via a pivot (which can be defined by one or more pins extending through an end of the handle 28 and through one or more bosses on the mounting plate). Alternatively, the handle 28 can be hinged to the basket portion in any other conventional manner, such as by a conventional double-jointed hinge, a piano hinge, one or more laterally-extending pins or posts extending from the handle 28 into mating apertures in a mounting plate on the basket portion 26, one or more loops on the end of the handle 28 within which is pivotably received a frame member of the basket portion 26 (such as an upper wire frame of the basket portion 26), and the like.

In more preferred embodiments of the present invention, the handle 28 is connected to the basket portion 26 by a hinge mechanism 32 as shown in FIGS. 1-3. This hinge mechanism 32 permits the basket portion 26 to be raised and lowered within the oil pan 14, and more preferably permits the basket portion 26 to maintain a substantially horizontal orientation in its various elevational positions within the oil pan 14. Examples of such a four-bar linkage mechanism are disclosed in United States Patent Number 5,771,781 issued to Sham and United States Patent Number 5,931,081 issued to Sham et al. (the Sham patents), the disclosures of which are incorporated herein by reference insofar as they relate to hinge mechanisms for deep fryer baskets. Highly preferred embodiments of the present invention employ frying baskets 12 having hinge mechanisms 32 constructed and operating in a manner such as that disclosed in the Sham patents. Still other manners of pivotably connecting the basket handles 28 to the basket portions 26 of the frying baskets 12 are well known in the art, can be used in conjunction with the deep fryer 10, and fall within the scope of the present invention.

The use of multiple frying baskets 12 in the same household deep fryer permits more than one food to be cooked in the deep fryer 10 at one time - an advantage not available in conventional portable household deep fryers. Although two frying baskets 12 are preferably used in the deep fryer 10, three or even more frying baskets 12 can be used as desired. In highly preferred embodiments of the present invention, one large frying basket 12 can be received within the oil pan 14, and two smaller frying baskets 12 can also be received as shown in FIGS. 1-3. In still other embodiments, three or more small baskets can also be selected by the user for placement in the oil pan 14. When multiple baskets 12 are employed, the baskets 12 can be the same size and shape or can be different sizes and shapes as shown in the figures. This provides additional flexibility for the user in those cases where different sizes or amounts of each food type are to be prepared at the same time.

The oil pan 14 can be any shape desired, such as rectangular, square, round, oval, and the like. To facilitate easier cleaning of the deep fryer 10, the oil pan 14 is preferably removable from the housing 18. Preferably, the heater 16 and the oil pan 14 are connected so that they are removable from the housing 18 as a single unit. This permits improved access to the heater 16 and to the inside of the housing 18 for cleaning and for heater repair and replacement, if necessary. However, the heater 16 can instead be mounted within the housing 18 in any conventional manner, such as by one or more mounts, brackets, stand-offs, and the like (each preferably made of heat insulating material, particularly where the deep fryer 10 has a low-temperature thermoplastic housing 18 as described in more detail below). In the latter case, the oil pan 14 can rest upon the heater 16, can have a skirt, flanges, or one or more legs resting upon the bottom of housing 18, an internal wall of the deep fryer 10, or upon one or more mounts within the housing 18 (also preferably made of heat insulating material). The oil pan skirt, flanges, or legs can be integral with the oil pan 14, can be separate elements attached to the oil pan 14 in any conventional manner, and can themselves be made of heat insulating material.

In the preferred embodiment of the present invention shown in the figures, the oil pan 14 has a number of downwardly depending legs that are integral with the bottom of the oil pan 14. The legs 34 each preferably have a mount 36 made of heat insulating material such as aluminum, high temperature plastic, ceramic, and the like. The mounts 36 are preferably attached to the bottom of the oil pan 14 by a threaded connection between the mounts 36 and the legs 34. Each mount 36 can be made of multiple elements of different material or the same material, but most preferably is a single element screwed into a threaded aperture in a corresponding oil pan leg 34. Other manners of connecting the mounts 36 to the oil pan legs 34 are possible, such as by high-temperature adhesive, conventional fasteners, press-fitting, welding, brazing, and the like. In alternative embodiments, the mounts 36 can be integral with or be attached to a wall or framework within the housing 18 or to the bottom of housing 18 as mentioned above.

In the illustrated preferred embodiment, the oil pan 14 and mounts 36 rest upon an internal wall 38 of the housing 18. The internal wall 38 can be made of any rigid or substantially rigid material capable of supporting the weight of the oil pan 14 (and oil therein), and is preferably made of aluminum, steel, or other metal. To assist in properly positioning the oil pan 14 within the housing 18 (whether for easier assembly or for easier insertion by a user if the oil pan 14 is removable), the internal wall 38 can have recesses, dimples, or other types of seats 40 within which the mounts 36 can be received, or can otherwise have locating bumps, walls, or protrusions defining seat positions for the mounts 36. With reference to the removable oil pan 14 in FIGS. 1-3, the seats 40 permit a user to easily and consistently position the oil pan 14 within the housing 18. This feature establishes proper contact between the oil pan 14 and the control module 24 as described below and, where the heater 16 and oil pan 14 are removable as a single integral unit, this feature reliably positions the heater 16 for easy connection to the control module 24 as also described below.

Although the seats 40 are preferably located in the internal wall 38 as just described, these seats 40 can be located in a bottom wall 42 of the housing 18, in which case the mounts 36 are most preferably made of insulative material (particularly where the bottom wall 42 is made of a relatively low-temperature thermoplastic material).

It should be noted that a number of mounts 36 received within corresponding seats 40 in the internal wall 38 is preferred for the positioning, spacing, and insulating functions described above. However, one having ordinary skill in the art will recognize that the mounts 36 can be attached to or made integral with the internal wall 38, and can be received within seats in the bottom surface of the oil pan 14. Regardless of which element the mounts 36 are attached to, it should also be noted that the mounts 36 can take any shape or form desired, such as one or more ribs, blocks, rings, posts, pins, walls, ridges, bumps, protuberances, or other elements extending from the legs 34, the bottom surface of the oil pan 14, the internal wall 38, or the bottom wall 38 of the housing 18 as the case may be (and mating with or seating against respective apertures, sockets, dimples, ridges, rings, grooves, recesses, or other elements to position the oil pan 14 as described above).

The heater 16 is preferably a conventional electric resistance heater extending across a substantial portion of the underside of the oil pan 14. Although the heater 16 can take any shape desired, including without limitation straight, coil, loop, or other shapes, the heater 16 preferably is generally W-shaped, with the ends of the W defining the connecting terminals 44 for the heater 16. This shape preferably defines at least a partial loop beneath opposite sides of the oil pan 14, connected by one or more middle lengths of the heater 16 crossing the middle of the oil pan 14. A generally W-shaped heater thereby provides a distribution of heat across the bottom of the oil pan 14. As described above, the heater 16 is preferably connected to the bottom of the oil pan 14 and is therefore removable from the housing 18 with the oil pan 14. The heater 16 can be connected to the oil pan 14 in any conventional manner, such as by conventional fasteners, brazing, welding, brackets, and the like. Preferably however, the heater 16 is molded, cast, or otherwise embedded in the bottom of the oil pan 14. Manufacturing methods for molding, casting, or otherwise embedding heating elements within a surface are well known to those skilled in the art and are not therefore described further herein.

The lid 20 of the deep fryer 10 is preferably hinged to the housing 18 in order to removably cover the open top 22 of the housing 18. Preferably, the lid 20 is held in a closed position by a conventional latch or catch (not shown) manipulatable by a user to release the lid 20. Numerous conventional hinge types exist and can be used with the lid 20, some of which permanently mount the lid 20 to the housing 18 and some of which permit complete removal of the lid 20 from the housing 18. The latter hinge type is most preferred for purposes of cleaning the deep fryer 10 (e.g., in a dishwasher or sink). With reference to the illustrated preferred embodiment shown in the figures, the hinge 46 preferably includes at least one finger 45 removably received within a mating aperture 47 in the housing 18. Each finger 45 is preferably connected to the lid 20 by a hinge pin 48. Preferably, the hinge pin 48 is spring-loaded by spring 50 to bias the lid 20 to an open position when installed on the housing 18. One having ordinary skill in the art will appreciate that the locations of the finger(s) 45 and mating apertures 47 can be reversed on the housing 18 and lid 20, if desired. Also, numerous other conventional spring-loaded and non-spring-loaded hinge types can be used that permit disconnection of the lid 20 from the housing 18, each of which falls within the spirit and scope of the present invention. Similarly, the lid 20 can be hinged to the housing 18 directly by one or more hinge pivots. Like the removable hinge design shown in FIGS. 1-3, the hinge pivots can be spring loaded to bias the lid 20 in an open position.

As an alternative to the hinged lid 20 described above and illustrated in the figures, the deep fryer 10 can have multiple lids for removably covering a portion of the open top 22 of the housing 18. This permits a user to uncover and remove one basket 12 without uncovering the other basket 12. The lids can be the same or different sizes corresponding to different sizes of baskets in the deep fryer 10. As another alternative, the hinged lid 20 can be replaced by a lid that is not hinged to the housing 18 but that is instead only placed over the open top 22 of the housing 18 and that can be secured thereon in any conventional manner. For example, the removable lid can be screwed onto the top of the housing 18 via mating threads or thread portions on the lid 20 and housing 18, can be held thereon by one or more conventional latches or catches, etc.

Preferably, the lid 20 also has at least one window 52 through which a user can see the interior of the deep fryer 10 without requiring the user to open or otherwise remove the lid 20. The window 52 is preferably made of high-temperature glass, plastic, or other heat-resistant transparent material, and is positioned over the basket portions 26 of the baskets 12 to enable the user to readily see food being cooked within the basket portions 26.

Referring again to FIGS. 1-2, the lid 20 preferably has a heat shield 54 attached to the underside thereof in any conventional manner, such as by rivets, screws, or other conventional fasteners, by snap-fitting onto the underside of the lid 20, by high-temperature adhesive, and the like. Other than an aperture for the lid window 52 described above, the heat shield 54 is shaped to cover substantially all of the underside of the lid 20 as shown in the figures, and is preferably spaced a distance from the underside of the lid 20 to define an insulating air gap between the heat shield 54 and the underside of the lid 20. The heat shield 54 is preferably made of aluminum, steel, or other material capable of withstanding the high cooking temperatures experienced in deep frying.

To permit venting during operation of the deep fryer 10, the lid 20 and heat shield 52 preferably have a plurality of vent apertures 56 therethrough. Preferably, a conventional filter element 57 covers at least the apertures 56 in the lid 20 to prevent oil vapor from escaping from the deep fryer 10. More preferably, the filter element 57 is held in place (without fasteners or fastening material) between the heat shield 54 and the lid 20. However, the filter element 57 can instead be retained over the lid apertures 56 in any conventional manner, such as by tape, adhesive, conventional fasteners, one or more retaining lips or ridges extending from the lid 20 and/or heat shield 54, etc. Preferably, the filter element 57 of the illustrated preferred embodiment can be replaced by a user by removing the heat shield 54.

The lid 20 of the deep fryer 10 also preferably has a gasket 58 to seal the lid 20 over the oil pan 14. The gasket 58 prevents oil vapor from escaping from the region between the lid 20 and the oil pan 14 to other areas in of the deep fryer 10, thereby extending the life of the deep fryer controls and keeping the internal areas of the deep fryer 10 clean. The gasket 58 is preferably a tubular member made of resilient deformable and thermally insulating material such as rubber or plastic, and is compressed when the lid 20 is closed upon the housing 18. By closing the lid 20 and compressing the gasket 58 between the top edge 60 of the oil pan 14 and the lid 20, the oil pan 14 is also held in its place within the housing 18 (and thereby preferably immobilized from horizontal or lateral movement therein). Any thermal expansion of the oil pan 14 during operation of the deep fryer 10 is preferably absorbed by the gasket 58 and/or movement or deformation of the internal wall 38 upon which the oil pan 14 is supported. Although a tubular gasket is preferred due to its ability to deform under compression and to thereby create an improved seal, it should be noted that the gasket 58 need not necessarily be tubular. The gasket 58 can be hollow or solid and can have any cross sectional shape desired.

The gasket 58 is preferably attached to the heat shield 54 and runs along the top edge 60 of the oil pan 14. To this end, the top edge 60 of the oil pan 14 is preferably flanged or flared to provide a surface against which the gasket 58 can seat and be compressed when the lid 20 is closed. The gasket 58 can be attached to the heat shield 54 or to the body of the lid 20 in any conventional manner, such as by high-temperature adhesive, by conventional fasteners such as rivets, screws, clips, bands, and the like, by having one or more grooves or apertures therein within which are received mating portions of the heat shield 54 or body of the lid 20 (e.g., a rib, turned edge or lip of the heat shield 54 or lid body 20 insertable into a mating groove running along the gasket 58, one or more posts, pins, or other extensions of the heat shield 54 or lid body 20 insertable within mating apertures in the gasket 58, etc.), by being press fit within a groove within the heat shield 54 or the body of the lid 20, and the like. In less preferred embodiments of the present invention, the gasket 58 is attached to the top edge 60 of the oil pan 14 in any of the manners described above with reference to gasket attachment to the heat shield 54. In these embodiments, the heat shield 54 preferably has a flared or flanged edge or otherwise has a surface against which the gasket 58 can be compressed in a manner similar to gasket compression against the top edge 60 of the oil pan 14 as described above.

Other embodiments of the present invention can employ more than one gasket 58 to seal the lid 20 to the oil pan 14. For example, a gasket attached to the lid 20 and a gasket attached to the top edge 60 of the oil pan 14 can be compressed together to create the desired seal when the lid 20 is closed. As another example, two or more concentric gaskets 58 can be attached to the lid 20 or to the top edge 60 of the oil pan 14 to provide multiple barriers to oil vapor.

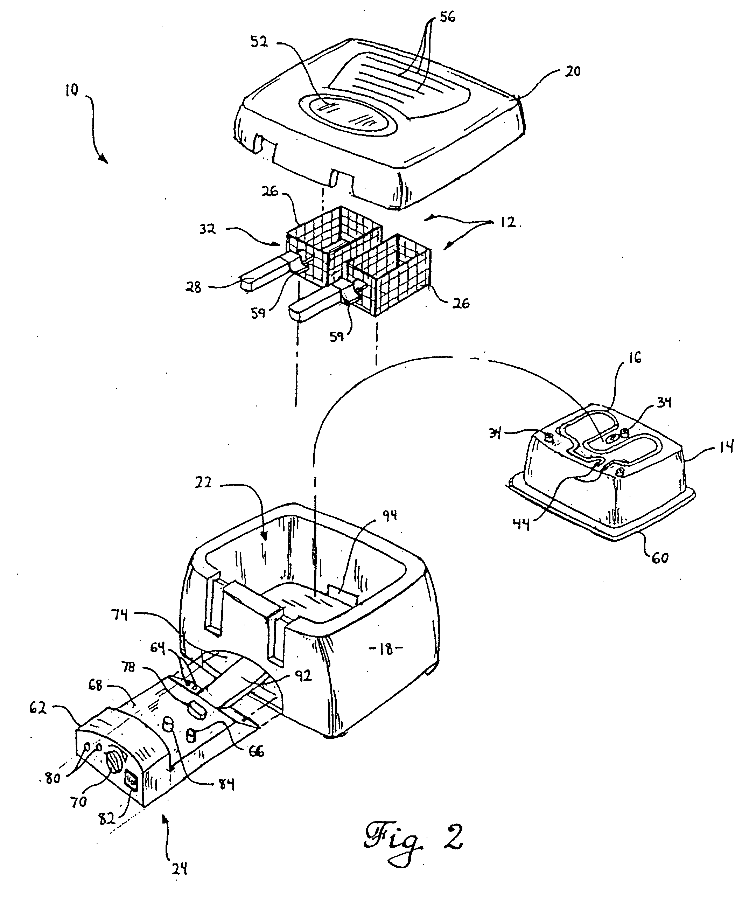

In order to permit lid closure over the open top of the housing 22 and over the basket handles 28 extending to positions outside of the housing 18, the heat shield 54, gasket(s) 58, and body of the lid 20 preferably define apertures through which the handles 28 of the baskets 12 extend. With reference to the illustrated preferred embodiment of the present invention, the heat shield 54, gasket 58, and body of the lid 20 have a recessed or concave portion shaped to define an aperture through which the basket handles 28 extend when the lid 20 is closed. Most preferably, the gasket 58 and portions of the handles 28 extending through the gasket 58 are shaped in a similar manner as best seen in FIGS. 1 and 2 in order to provide a seal about the basket handles 28 when the lid 20 is closed. To this end, the basket handles 28 preferably have seal extensions 59 that are integral with or are attached to the basket handles 28 in any conventional manner (e.g., by welding, snap-fitting, conventional fasteners, and the like), and can be made from any heat resistant material desired, such as high-temperature plastic, metal, fiberglass, composites, etc. The optional seal extensions 59 are shaped to match the shape of the gasket 58 and heat shield 54 or lid body to which the gasket 58 is attached and thereby provide a better seal against oil vapor escape. Although the seal extensions 59 (and the gasket 58) are optional features of the present invention, their use helps to contain oil vapors within the cooking chamber defined by the interior of the oil pan 14 and the heat shield 54 and/or lid 20, thereby providing for easier cleanup and improved controls protection.

Although the deep fryer 10 of the present invention can employ controls that are permanently mounted within an insulated or non-insulated controls compartment in the housing 18 (as is common in conventional deep fryer designs), a removable control module 24 such as that shown in FIGS. 1-4 is most preferred. With reference first to FIGS. 1 and 2, the control module 24 can preferably be detached and removed from the deep fryer 10 by the user. The control module 24 preferably is essentially a power plug for the deep fryer 10, and contains electronic controls for controlling power to the heater 16 and thereby for controlling the temperature of the oil in the oil pan 14 and the food being cooked therein.

The control module 24 has a housing 62 within which are mounted terminals 64 for connection to the heater terminals 44. The terminals 64 are preferably female and are sized and shaped to detachably receive male heater terminals 44. The terminals 44 of the heater 16 can instead be female and can detachably receive male terminals on the control module 24.

The terminals 44, 64 of the heater 16 and control module 24 can be substantially horizontal for horizontal sliding connection of the control module 24 to the heater 16. However, more preferred embodiments of the present invention such as that shown in the figures employ heater terminals 44 that extend downwardly or at a downwardly-sloping angle with respect to the oil pan 14 for reasons that will be described below. In such cases, the female terminals 64 of the control module 24 are preferably oriented in the same manner as the heater terminals 44 to permit proper releasable mating of the terminals 44, 64. Where the heater terminals 44 are female and detachably receive male terminals 64 on the control module, the same orientation of the terminals just described can also be employed.

Preferably, the control module 24 and terminals 44, 64 are oriented to prevent disconnection of the terminals 44, 64 (and removal of the control module 24) without removal of the oil pan 14. More specifically, the connection made between the terminals 44, 64 are preferably at a sufficient angle with respect to a horizontal plane that a vertical component of movement is required to disconnect the control module terminals 64 from the heater terminals 44. Because the control module 24 is preferably only movable in a substantially horizontal direction, such disconnection can preferably be performed only by removal of the oil pan 14. Preferably, connection of the terminals 44, 64 is also therefore possible only where the control module 24 is inserted into the aperture 74 (see below) of the housing 18 prior to insertion of the oil pan 14 in the housing 18. This feature prevents accidental disconnection of the terminals 44, 64 and accidental removal of the control module 24. In less preferred embodiments of the present invention, the heater and control module terminals 44, 64 can be substantially horizontally aligned and can permit connection and disconnection by sliding of the control module into and out of the aperture 74 in the housing 18 regardless of when the oil pan 14 is placed in the housing 18. In still other embodiments, the terminals 44, 64 can be relatively positioned so that connection of the control module terminals 64 to the heater terminals 44 is possible only after the oil pan 14 has been inserted within the housing 18. It should also be noted that any number of different terminal types can be employed in any of the above-described embodiments to releasably connect the control module 24 to the heater 16, each of which falls within the spirit and scope of the present invention.

The removable control module 24 also preferably has a thermostat 66 mounted on a wall 68 thereof. The temperature-sensing portion of the thermostat 66 preferably extends sufficiently past the wall 68 of the control module 24 to contact the oil pan 14 received within the housing 18 (preferably properly located with respect to the control module 24 by the seats 40 as described above). While the thermostat 66 can be of any conventional form having a temperature-sensing portion placed in contact with a surface of the oil pan 14 when the control module 24 and oil pan 14 are installed within the deep fryer 10, the temperature-sensing portion of the thermostat 66 is preferably spring-loaded for improved measuring accuracy. Springloaded temperature sensors are well known to those skilled in the art and are not therefore described further herein.

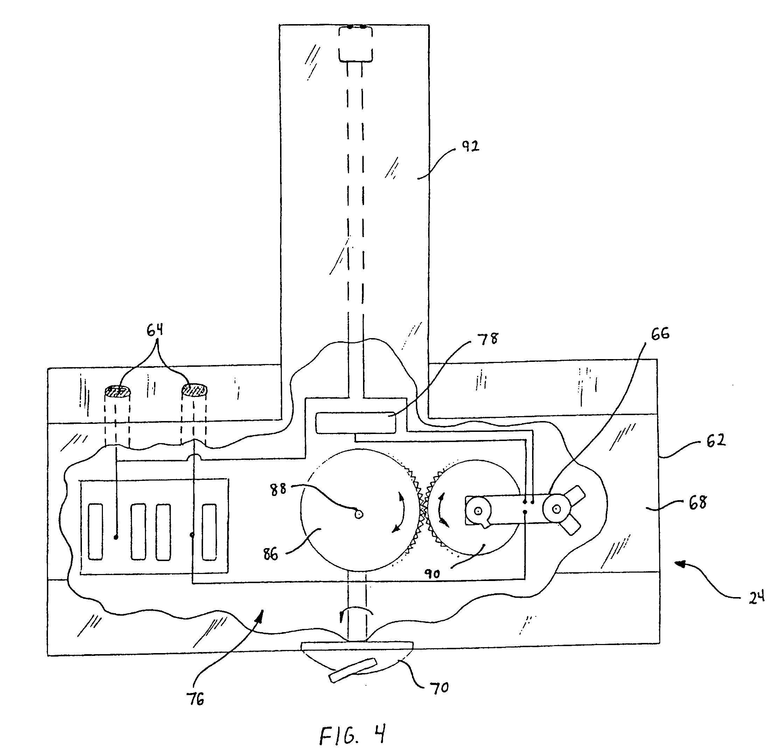

The control module 24 also preferably has a user-manipulatable temperature control 70 for controlling power supplied to the heater 16 from the control module 24. The temperature control 70 is preferably a dial or knob that can be turned by a user to turn the deep fryer 10 on and off (i.e., supply or cut the supply of electrical power to the heater 16, respectively) and to adjust the power to the heater 16 via a conventional power control device such as a rheostat. One having ordinary skill in the art will appreciate that a number of other user-manipulatable temperature control devices, circuitry, and electronics can be employed for performing the same function, such as a keypad having one or more buttons thereon electrically connected in a conventional manner to a control board or conventional power control circuitry 76, a lever or other arm movable through a range of positions corresponding to different positions of a rheostat or like device, and the like. Still other user-manipulatable devices for adjusting power to the heater 16 are possible and fall within the spirit and scope of the present invention. In the illustrated preferred embodiment, the control knob 70 has no electrical connection to the power control circuitry 76 of the control module 24. Instead, the control knob 70 is connected to a primary gear 86 mounted for rotation about a pivot 88 preferably extending from the housing 62 of the control module 24 (shown only in FIG. 4). The primary gear 86 is preferably connected to turn the thermostat 66 by meshing with a gear 90 mounted upon the thermostat 66 as shown in FIG. 4 (also shown only in FIG. 4). Therefore, by turning the control knob 70, a user can manually adjust the thermostat 66 via gears 86, 90 to a desired temperature setting. The thermostat 66 thereafter operates in a well known manner to control power to the heater 16 based upon the oil pan temperature sensed by the thermostat 66 as described above. Thermostats and like devices capable of user-adjustment to control power to a heater are conventional in nature and operation and are not therefore described further herein.

If desired, the control module 24 can be provided with an indicator light 80 electrically connected to the temperature control 70 in any conventional manner for indicating when power is supplied to the heater 16 (i.e., when the deep fryer is "on"). Some highly preferred embodiments of the present invention also have a conventional analog or digital timer 82 connected in any conventional manner to the temperature control 70 and/or to the deep fryer controls 76 to supply power to the heater 16 for an amount of time set by the user. The timer 82 can be supplied from the same source of power supplying the heating element 16 or can be supplied with power by its own preferably replaceable battery (not shown). The timer 82 is preferably manually operated and can also or instead have factory pre-set cooking times corresponding to any number of different food types or cooking preferences.

Highly preferred embodiments of the present invention employ a control module 24 having a thermal fuse 78 for cutting power to the heater 16 in the event that an overheating condition is detected. As shown in the illustrated preferred embodiment, the thermal fuse 78 can have a temperature-sensing portion extending beyond the wall 68 of the control module 24 in a manner similar to the thermostat 66 described above (in which case the temperature-sensing portion of the thermal fuse 78 is preferably spring-loaded in a conventional manner). Alternatively, the thermal fuse 78 can be electrically connected to the thermostat 66 and can be triggered in any conventional manner by the temperature sensed by the thermostat 66.

In some highly preferred embodiments, the control module 24 can be provided with a power switch 84 that is spring-loaded to contact and be pressed by the oil pan 14 when the oil pan 14 is inserted in the housing 18. The contact (not shown in FIG. 4) can be connected to the circuitry of the control module 24 in any conventional manner to open and close power to the heater 16 when the power enable switch 84 is removed from and inserted within the housing 18, respectively. Switches performing this function and their manner of operation and connection to power circuitry are well known to those skilled in the art and are not therefore described further herein. The power switch 84 serves as a safety device in which power is supplied to the heater 16 only when the oil pan 14 is properly installed in its place within the housing 18.

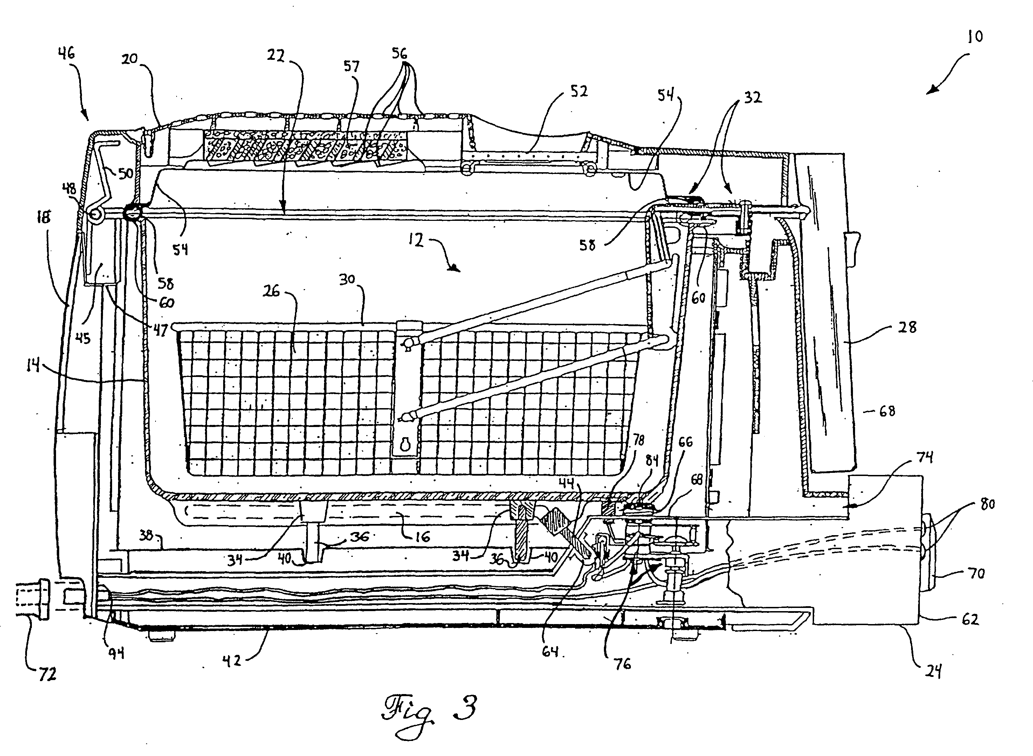

Power to the control module 24 is preferably supplied via a power cord 72 mounted to the control module 24. Most preferably, the power cord 72 is disconnectable from the control module 24 via a conventional releasable electrical connection. Although the power cord 72 can extend from any location on the control module 24, the power cord 72 preferably extends from a rear area of the control module 24 and deep fryer 10. To this end, the control module 24 preferably has an extension 92 that extends to the rear of the deep fryer 10 for connection of the power cord 72 thereto at the rear of the deep fryer 10. Such an extension and connection location is not necessary, but is highly desirable. The extension 92 can extend within the interior of the housing 18 and beneath the internal wall 38 and/or the oil pan 14 as best shown in FIG. 3, or can instead extend beneath the housing 18 for housings 18 having different shapes. In the former case, a rear aperture 94 in the housing 18 preferably exposes the end of the control module extension 92 (when installed in the housing 18) for connection to the power cord 72.

In less preferred embodiments of the present invention, not all of the deep fryer controls are located within the control module 24. The control module 24 can function simply as a detachable power plug for the deep fryer 10 or can include any or all of the deep fryer controls described above. Any of the above-described deep fryer controls can be permanently mounted in any other location on the housing 18 as desired. Most preferably however, all deep fryer controls (and especially those controls that cannot be immersed in water or that cannot be washed in a dishwasher) are located within the removable control module 24.

To removably receive the control module 24, the housing 18 preferably has an aperture 74 therethrough which preferably exposes at least a portion of the oil pan 14 and exposes the terminals 44 of the heater 16. By inserting the control module 24 into the housing aperture 74, the terminals 64 of the control module 24 connect with the terminals 44 of the heater 16, the power switch 84 is closed to supply power to the heater 16, and the thermostat 66 and thermal fuse 78 are brought into temperature-sensing contact with the oil pan 14.

By housing the controls for the deep fryer 10 within a detachable and enclosed control module 24, the electronics of the deep fryer 10 can be removed from the rest of the deep fryer 10 for easier cleaning. Specifically, the lid 20, oil pan 14, baskets 12, and housing 18 can then be immersed in water or washed in a dishwasher if desired. The control module 24 (with its electronic elements and circuitry) can be easily cleaned separately. As such, cleanup of the deep fryer 10 is more convenient, faster, and more thorough. Because the control module 24 is a separate structure within its own housing 62, the internal controls are less exposed to heat from deep fryer operation and are protected against oil vapor contamination.

The structure of the deep fryer 10 described above and illustrated in the figures provides the advantage of less heat exposure to the housing 18 and lid 20. In particular, because the oil pan 14 is spaced a distance from the front, rear, and sides of the housing 18 and is not in heat-conducting contact with the sides of the housing 18, operating temperatures of the housing sides are relatively low. In highly preferred embodiments such as the deep fryer 10 illustrated in the figures, the bottom wall 42 of the housing 18 is protected from high temperatures by air spaces between the oil pan 14 and the bottom wall 42, by heat insulating mounts 36, and by an internal wall 38 (although any one or more of these features can be used for the same purpose). Also, the exterior body of the lid 20 is protected from high temperatures by a thermally insulating gasket 58, an air space above the oil pan 14, by a heat shield 54, and by an air layer between the heat shield 54 and the exterior body of the lid 20. By virtue of these heat insulating features, the exterior surfaces of the deep fryer 10 are maintained at a relatively low temperature. Temperatures are kept under 200°C with these features, and can even be kept under 150°C.

The housing 18 and the body of the lid 20 are preferably made from a thermoplastic material (although less preferred materials such as metal, fiberglass, composites, and the like could be used if desired). The lower operating temperatures of the housing 18 and lid 20 just described not only provide for safer operation of the deep fryer 10, but also enable the use of lower temperature thermoplastic materials for the housing 18 and the lid 20. Many inexpensive thermoplastic materials providing an attractive appearance for appliance exteriors cannot continuously withstand temperatures in excess of 150°C. By employing the temperature insulating features of the present invention, the housing 18 and the body portion of the lid 20 can be (and preferably are) made from such thermoplastic materials.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the spirit and scope of the present invention as set forth in the appended claims.

For example, the oil pan 14 of the deep fryer 10 is preferably horizontally and vertically positioned within the housing 18 by the mounts 36 within the seats 40 described above. It should be noted, however, that the oil pan 14 can be positioned horizontally and vertically within the housing 18 in a number of other manners. For example, mounts can be attached to the sides of the housing 18 and extend to the oil pan 14 for connection therewith or for the oil pan 14 to rest thereupon. The mounts can take the form of lips, ledges, ribs, posts, walls, or any other elements extending to the oil pan 14 and capable of supporting the weight of the oil pan 14 thereon and/or positioning the oil pan 14 within the housing 18. The mounts can support and/or engage the oil pan 14 in a number of different manners, such as by lips, ledges, ribs, posts, walls, or other elements extending from the exterior surface of the oil pan 14 to engage with or rest upon the mounts. The mounts can support or engage the oil pan 14 at any location along the height of the oil pan 14 (from a position beneath the lower surface of the oil pan 14 to a position supporting or engaging the upper lip of the oil pan 14). For purposes of stability, a number of the mounts are preferably located about the circumference of the oil pan 14. For purposes of heat insulation, the mounts are preferably made of a heat insulating material to prevent heat conduction to the housing 18. The mounts extending from the sides of the housing 18 need not necessarily both support and position the oil pan 14 in the housing 18. For example, the mounts can function simply to properly align the oil pan 14 inside the housing 18 while other mounts such as the bottom mounts 36 described above function to support the weight of the oil pan. In short, each embodiment of the present invention preferably has at least one mount located on the interior bottom, interior sides, or both the interior bottom and interior sides of the housing 18 for spacing the oil pan 14 with respect to the bottom and/or sides of the housing 18 and preferably for supporting the oil pan 14 within the housing 18.

## Claims

1. A portable/domestic deep fryer for consumer use, comprising a housing (18) having an opening (22), a lid (20) positionable over the opening (22) to define a substantially enclosed cooking chamber within the housing (18), a pan (14) mounted within the cooking chamber, at least one heat insulative mount (36) located between the pan (14) and the housing (18) to position the pan (14) in spaced relationship from the housing (18), a heater (16) adjacent to the pan (14), and at least two baskets (12) removably received within the pan (14) **characterised in that** the fryer is configured so that the baskets (12) are positioned side-by-side in the pan (14) each basket (12) having a basket portion (26) and a handle (28) connected by a hinge mechanism (32) to permit each basket portion (26) to be independently raised and lowered within the pan (14).

2. The portable deep fryer as claimed in claim 1 wherein the hinge mechanism comprises a four-bar linkage.

3. The portable deep fryer as claimed in claim 1 or 2 wherein the housing (18) is made from a thermoplastic material.

4. The portable deep fryer as claimed in claim 3 wherein the housing (18) comprises thermoplastic material incapable of continuously withstanding temperatures in excess of 200°C.

5. The portable deep fryer as claimed in any preceding claim wherein the pan (14) is removable from the cooking chamber.

6. The portable deep fryer as claimed in any preceding claim wherein the mount (36) is located beneath the pan (14) and at least partially supports the pan (14).

7. The portable deep fryer as claimed in any preceding claim wherein the pan (14) has a side wall, the deep fryer further comprising a heat insulative mount located between the side wall of the pan (14) and the housing (18).

8. The portable deep fryer as claimed in any preceding claim wherein the pan (14) has a side wall and wherein the mount (36) is located between the side wall of the pan (14) and the housing (18).

9. The portable deep fryer as claimed in any preceding claim further comprising a compressible gasket (58) providing a seal between the lid (20) and the housing (18) when the lid (20) is closed over the cooking chamber.

10. The portable deep fryer as claimed in any preceding claim further comprising a power plug (62) releasably connected to the heater (16) via an aperture (17) in the housing (18).

11. The portable deep fryer as claimed in claim 10 wherein the power plug (62) includes a thermostat (66) positioned in temperature-sensing relationship with the pan (14) when the power plug (62) is connected to the heater (16).

12. The portable deep fryer as claimed in claim 10 further comprising a temperature control (70) on the power plug (62), the temperature control (70) being user-manipulative to control power to the heater (16).

13. The portable deep fryer as claimed in any preceding claim wherein at least two of the baskets (12) have different sizes.

14. The portable deep fryer as claimed in any preceding claim wherein each basket (12) has an upper position and a lower position in which it can be retained in the pan (14).

15. A portable deep fryer as claimed in any preceding claim wherein the removable oil pan (14) has a lip and the housing has a side wall, and wherein the lip of the housing (18) and the side wall of the housing (18) are coupled by the at least one mount.

16. A method of assembling a deep fryer according to any of claims 1 to 15 comprising mounting a heater (16) in a thermoplastic housing (18), inserting a liquid-receiving pan (14) within the thermoplastic housing (18), separating the liquid-receiving pan from contact with the thermoplastic housing (18) via at least one heat insulative mount (36), inserting a first basket (12) within the liquid-receiving pan (14), inserting a second basket (12) within the liquid-receiving pan (14) and placing a lid (20) over the thermoplastic housing (18) to substantially enclose the first and second baskets (12) **characterised in that** the step of inserting the second basket (12) involves placing it beside the first basket (12), each basket having a basket portion (26) and a handle (28) connected by a hinge mechanism (32) to permit each basket portion (26) to be independently raised and lowered within the pan.

17. The method as claimed in claim 16 further comprising vertically positioning the pan (14) within the thermoplastic housing (18) by the at least one heat insulative mount (36).

18. The method as claimed in claim 16 or 17 further comprising horizontally positioning the pan (14) within the thermoplastic housing (18) by the at least one heat insulative mount (36).

19. The method as claimed in claim 18 further comprising lowering the first and second baskets (12) in the pan (14) after inserting the first and second baskets (12) in the pan (14).

20. The method as claimed in any of claims 16 to 19 further comprising folding handles (28) of the first and second baskets (12) into stowed positions on the thermoplastic housing (18).

21. The method as claimed in any of claims 16 to 20 wherein placing the lid (20) over the thermoplastic housing (18) includes rotating the lid (20) into a position over the first and second baskets (12) and the pan (14).

22. The method as claimed in any of claims 16 to 21 wherein placing the lid (20) over the thermoplastic housing (18) includes attaching the lid (20) to the thermoplastic housing (18).

23. The method as claimed in any of claims 16 to 22 further comprising connecting a detachable power plug (62) to an electric heater (16) in the thermoplastic housing (18).

24. The method as claimed in any of claims 16 to 23 further comprising positioning a thermostat (66) in temperature-sensing relationship with the pan (14) during connection of the detachable power plug (62) to the electric heater (16).

## Patentansprüche

1. Tragbare Haushalts-Friteuse zur Verwendung beim Verbraucher, umfassend ein Gehäuse (18) mit einer Öffnung (22), einen Deckel (20), der über der Öffnung (22) positionierbar ist, um eine im Wesentlichen umschlossene Kochkammer in dem Gehäuse (18) zu definieren, eine Wanne (14), die in der Kochkammer angeordnet ist, wenigstens eine wärmeisolierende Halterung (36), der zwischen der Wanne (14) und dem Gehäuse (18) angeordnet ist, um die Wanne (14) in beabstandetem Verhältnis zum Gehäuse (18) zu positionieren, eine Heizvorrichtung (16) neben der Wanne (14) und wenigstens zwei Körbe (12), die entfernbar in der Wanne (14) aufgenommen sind, **dadurch gekennzeichnet, dass** die Friteuse so gestaltet ist, dass die Körbe (12) Seite an Seite in der Wanne (14) positioniert sind, wobei jeder Korb (12) ein Korbteil (26) und einen Griff (28) aufweist, die durch einen Gelenksmechanismus (32) verbunden sind, so dass jedes Korbteil (26) unabhängig in der Wanne (14) gehoben und gesenkt werden kann.

2. Tragbare Friteuse nach Anspruch 1, wobei der Gelenksmechanismus ein Gelenkviereck umfasst.

3. Tragbare Friteuse nach Anspruch 1 oder 2, wobei das Gehäuse (18) aus thermoplastischem Material gebildet ist.

4. Tragbare Friteuse nach Anspruch 3, wobei das Gehäuse (18) aus einem thermoplastischen Material besteht, das Temperaturen über 200 °C nicht dauerhaft standhalten kann.

5. Tragbare Friteuse nach einem der vorangehenden Ansprüche, wobei die Wanne (14) aus der Kochkammer entfernbar ist.

6. Tragbare Friteuse nach einem der vorangehenden Ansprüche, wobei die Halterung (36) unterhalb der Wanne (14) angeordnet ist und die Wanne (14) wenigstens teilweise stützt.

7. Tragbare Friteuse nach einem der vorangehenden Ansprüche, wobei die Wanne (14) eine Seitenwand aufweist und die Friteuse des Weiteren eine wärmeisolierende Halterung umfasst, die zwischen der Seitenwand der Wanne (14) und dem Gehäuse (18) angeordnet ist.

8. Tragbare Friteuse nach einem der vorangehenden Ansprüche, wobei die Wanne (14) eine Seitenwand aufweist und die Halterung (36) zwischen der Seitenwand der Wanne (14) und dem Gehäuse (18) angeordnet ist.

9. Tragbare Friteuse nach einem der vorangehenden Ansprüche, des Weiteren umfassend eine komprimierbare Dichtung (58), die eine Abdichtung zwischen dem Deckel (20) und dem Gehäuse (18) bewirkt, wenn der Deckel (20) über der Kochkammer geschlossen ist.

10. Tragbare Friteuse nach einem der vorangehenden Ansprüche, des Weiteren umfassend eine Netzanschlussvorrichtung (62), die mit der Heizvorrichtung (16) über eine Öffnung (17) in dem Gehäuse (18) lösbar verbunden ist.

11. Tragbare Friteuse nach Anspruch 10, wobei die Netzanschlussvorrichtung (62) einen Thermostaten (66) enthält, der in Temperatur erfassender Beziehung zu der Wanne (14) positioniert ist, wenn die Netzanschlussvorrichtung (62) mit der Heizvorrichtung (16) verbunden ist.

12. Tragbare Friteuse nach Anspruch 10, des Weiteren umfassend eine Temperatursteuerung (70) an der Netzanschlussvorrichtung (62), wobei die Temperatursteuerung (70) vom Benutzer reguliert werden kann, um die Stromzufuhr zu der Heizvorrichtung (16) zu steuern.

13. Tragbare Friteuse nach einem der vorangehenden Ansprüche, wobei die wenigstens beiden Körbe (12) verschiedene Größen haben.

14. Tragbare Friteuse nach einem der vorangehenden Ansprüche, wobei jeder Korb (12) in einer oberen Position und einer unteren Position in der Wanne (14) gehalten werden kann.

15. Tragbare Friteuse nach einem der vorangehenden Ansprüche, wobei die entfernbare Ölwanne (14) eine Lippe und das Gehäuse eine Seitenwand aufweist, und wobei die Lippe der Ölwanne (14) und die Seitenwand des Gehäuses (18) durch die wenigstens eine Halterung gekoppelt sind.

16. Verfahren zum Zusammenbauen einer Friteuse nach einem der Ansprüche 1 bis 15, umfassend das Anbringen einer Heizvorrichtung (16) in einem thermoplastischen Gehäuse (18), das Einsetzen einer Flüssigkeit aufnehmenden Wanne (14) in das thermoplastische Gehäuse (18), die Kontakttrennung der Flüssigkeit aufnehmenden Wanne von dem thermoplastischen Gehäuse (18) durch wenigstens eine wärmeisolierende Halterung (36), das Einsetzen eines ersten Korbes (12) in die Flüssigkeit aufnehmende Wanne (14), das Einsetzen eines zweiten Korbes (12) in die Flüssigkeit aufnehmende Wanne (14), und das Anordnen eines Deckels (20) über dem thermoplastischen Gehäuse (18), um im Wesentlichen den ersten und den zweiten Korb (12) einzuschließen, **dadurch gekennzeichnet, dass** der Schritt des Einsetzens des zweiten Korbes (12) dessen Anordnung neben dem ersten Korb (12) beinhaltet, wobei jeder Korb ein Korbteil (26) und einen Griff (28) aufweist, die durch einen Gelenksmechanismus (32) verbunden sind, so dass jeder Korbteil (26) unabhängig in der Wanne gehoben und gesenkt werden kann.

17. Verfahren nach Anspruch 16, des Weiteren umfassend das vertikale Positionieren der Wanne (14) in dem thermoplastischen Gehäuse (18) mittels der wenigstens einen wärmeisolierenden Halterung (36).

18. Verfahren nach Anspruch 16 oder 17, des Weiteren umfassend das horizontale Positionieren der Wanne (14) in dem thermoplastischen Gehäuse (18) mittels der wenigstens einen wärmeisolierenden Halterung (36).

19. Verfahren nach Anspruch 18, des Weiteren umfassend das Absenken des ersten und des zweiten Korbes (12) in der Wanne (14) nach dem Einsetzen des ersten und des zweiten Korbes (12) in die Wanne (14).

20. Verfahren nach einem der Ansprüche 16 bis 19, des Weiteren umfassend das Umklappen der Griffe (28) des ersten und des zweiten Korbes (12) in verstaute Positionen an dem thermoplastischen Gehäuse (18).

21. Verfahren nach einem der Ansprüche 16 bis 20, wobei das Anordnen des Deckels (20) auf dem thermoplastischen Gehäuse (18) das Drehen des Deckels (20) in eine Position über dem ersten und dem zweiten Korb (12) und der Wanne (14) beinhaltet.

22. Verfahren nach einem der Ansprüche 16 bis 21, wobei das Anordnen des Deckels (20) auf dem thermoplastischen Gehäuse (18) das Anbringen des Deckels (20) an dem thermoplastischen Gehäuse (18) beinhaltet.

23. Verfahren nach einem der Ansprüche 16 bis 22, des Weiteren umfassend das Verbinden einer lösbaren Netzanschlussvorrichtung (62) mit einer elektrischen Heizvorrichtung (16) in dem thermoplastischen Gehäuse (18).

24. Verfahren nach einem der Ansprüche 16 bis 23, des Weiteren umfassend das Positionieren eines Thermostats (66) in einer Temperatur erfassenden Beziehung zu der Wanne (14) während des Verbindens der Netzanschlussvorrichtung (62) mit der Heizvorrichtung (16).

## Revendications

1. Une friteuse portable / domestique destinée à l'utilisation par le consommateur, comprenant une enceinte (18) présentant une ouverture (22), un couvercle (20) pouvant être placé sur l'ouverture (22) de manière à définir une chambre de cuisson pratiquement close à l'intérieur de l'enceinte (18), une cuve (14) montée à l'intérieur de la chambre de cuisson, au moins un système de support isolant thermiquement (36) situé entre la cuve (14) et l'enceinte (18) de manière à positionner la cuve (14) à une certaine distance de l'enceinte (18), un élément chauffant (16) voisin de la cuve (14) et au moins deux paniers (12) logés de manière détachable à l'intérieur de la cuve (14), **caractérisée en ce que** la friteuse est configurée d'une manière telle que les paniers (12) soient positionnés côte à côte dans la cuve (14), chaque panier (12) comportant une portion formant panier (26) et une poignée (28) reliée par un mécanisme à chamière (32) permettant à chaque portion formant panier (26) de pouvoir être indépendamment soulevée et abaissée à l'intérieur de la cuve (14).

2. La friteuse portable selon la revendication 1, dans laquelle le mécanisme à chamière consiste en un embiellage à quatre barreaux.

3. La friteuse portable selon la revendication 1 ou la revendication 2, dans laquelle l'enceinte (18) est réalisée en une matière thermoplastique.

4. La friteuse portable selon la revendication 3, dans laquelle l'enceint (18) est constituée en un matériau thermoplastique incapable de supporter de manière continue des températures supérieures à 200° C.

5. La friteuse portable selon l'une quelconque des revendications précédentes, dans laquelle la cuve (14) peut être extraite de la chambre de cuisson.

6. La friteuse portable selon l'une quelconque des revendications précédentes, dans laquelle le système de montage (36) est situé au-dessous de la cuve (14) et supporte au moins partiellement la cuve (14).

7. La friteuse portable selon l'une quelconque des revendications précédentes, dans laquelle la cuve (14) présente une paroi latérale, la friteuse comprenant au surplus un système de montage isolant thermiquement situé entre la paroi latérale de la cuve et l'enceinte (18).

8. La friteuse portable selon l'une quelconque des revendications précédentes, dans laquelle la cuve (14) présente une paroi latérale et dans laquelle le système de montage (36) est situé entre la paroi latérale de la cuve (14) et l'enceinte (18).

9. La friteuse portable selon l'une quelconque des revendications précédentes, comprenant au surplus un joint compressible (58) créant une étanchéité entre le couvercle (20) et l'enceinte (18) quand le couvercle (20) est refermé par-dessus la chambre de cuisson.

10. La friteuse portable selon l'une quelconque des revendications précédentes, comprenant une prise de courant (62) reliée de manière détachable à l'élément chauffant (16) à travers une ouverture (17) pratiquée dans l'enceinte (18).

11. La friteuse portable selon la revendication 10, dans laquelle la prise de courant (62) comporte un thermostat (66)monté de manière à détecter la température dans la cuve (14) quand la prise de courant (62) est connectée à l'élément chauffant (16).

12. La friteuse portable selon la revendication 10, comprenant au surplus un système de contrôle de la température sur la prise de courant (62), le système de contrôle de température (70) étant destiné à être manipulé par l'utilisateur de manière à contrôler l'alimentation de l'élément chauffant (16).

13. La friteuse portable selon l'une quelconque des revendications précédentes, dans laquelle au moins deux des paniers (12) ont des dimensions différentes.

14. La friteuse portable selon l'une quelconque des revendications précédentes, dans laquelle chaque panier (12) peut prendre une position supérieure et une position inférieure dans laquelle il peut être maintenu dans la cuve (14).

15. Une friteuse portable selon l'une quelconque des revendications précédentes, dans laquelle la cuve à huile démontable (14) comporte une lèvre tandis que l'enceinte présente une paroi latérale, la lèvre de l'enceinte (18) et la paroi latérale de l'enceinte (18) étant couplées par au moins un système de montage.

16. Une méthode pour l'assemblage d'une friteuse selon l'une quelconque des revendications 1 à 15, consistant à monter un élément chauffant (16) dans une enceinte thermoplastique (18), à insérer une cuve de réception de liquide (14) à l'intérieur de l'enceinte thermoplastique (18), à séparer la cuve de réception de liquide de tout contact avec l'enceinte thermoplastique (18) par au moins un système de montage isolant thermiquement (36), à insérer un premier panier (12) à l'intérieur de la cuve de réception de liquide (14), à insérer un second panier (12) à l'intérieur de la cuve de réception de liquide (14) et à placer un couvercle (20) par-dessus l'enceinte thermoplastique (18) de manière à enfermer pratiquement le premier et le second (12), **caractérisée en ce que** l'étape consistant à insérer le second panier (12) consiste à le placer à côté du premier panier (12), chaque panier comportant une portion formant panier (26) et une poignée (28) réunie par un mécanisme (32) de manière à permettre à chaque portion formant panier (26) de pouvoir être indépendamment soulevée et abaissée à l'intérieur de la cuve.

17. La méthode selon la revendication 16, consistant au surplus à amener en position la cuve (14) à l'intérieur de l'enceinte thermoplastique (18) au moyen du système de montage isolant thermiquement (36).

18. La méthode selon la revendication 16 ou la revendication 17, consistant au surplus à amener en position horizontale la cuve (14) à l'intérieur de l'enceinte thermoplastique (18) au moyen du système de montage isolant thermiquement (36).

19. La méthode selon la revendication 18, consistant au surplus à abaisser le premier et le second panier (12) dans la cuve (14) après l'insertion du premier et du second panier (12) dans la cuve (14).

20. La méthode selon l'une quelconque des revendications 16 à 19, consistant au surplus à replier des poignées (28) du premier et du second panier (12) dans des positions de rangement sur l'enceinte thermoplastique (18).

21. La méthode selon l'une quelconque des revendications 16 à 20, dans laquelle l'opération consistant à placer le couvercle (20) sur l'enceinte thermoplastique (18) consiste à faire tourner le couvercle (20) dans une position située au-dessus du premier et du second panier (12) et de la cuve (14).

22. La méthode selon l'une quelconque des revendications 16 à 21, dans laquelle l'étape consistant à placer le couvercle (20) au-dessus de l'enceinte thermoplastique (18) indut le fait d'attacher le couvercle (20) sur l'enceinte thermoplastique (18).

23. La méthode selon l'une quelconque des revendications 16 à 22, consistant au surplus à connecter une prise de courant détachable (62) à un élément de chauffage électrique (16) dans l'enceinte thermoplastique (18).

24. La méthode selon l'une quelconque des revendications 16 à 23, consistant au surplus à placer un thermostat (66) dans une position de détection de la température avec la cuve (14) au cours de la connexion de la prise de courant détachable (62) à l'élément de chauffage électrique (16).
